# EUROPEAN PATENT APPLICATION

(11) **EP 3 815 893 A1**
(43) Date of publication of application: **05.05.2021**
(21) Application number: 19206225.5
(22) Date of filing: 30.10.2019
(51) Int. Cl.: B32B 3/26, B32B 7/02, B32B 17/10, B32B 27/08, B32B 27/30

(54) **LAMINATED GLASS WITH INTERLAYER FILM USING POLYVINYL ACETAL WITH IMPROVED POLYVINYL ALCOHOL CONTENT**

(71) Applicant: Kuraray Europe GmbH, 65795 Hattersheim (DE)
(72) Inventor: Ebeling, Bastian, 53840 Troisdorf (DE); Lellig, Philipp, 50670 Köln (DE); Beekhuizen, Jan Arndt, 53859 Niederkassel (DE); Mummy, Florian, 60325 Frankfurt am Main (DE)
(74) Representative: Janßen, Christian Oliver

(57) **Abstract**

The present invention relates to laminated glass comprising two glass sheets combined by an adhesive interlayer film which is manufactured with at least one layer based on polyvinyl acetal having low plasticizer content and an improved polyvinyl alcohol content.

## Description

The present invention relates to laminated glass comprising two glass sheets combined by an adhesive interlayer film which is manufactured with at least one layer based on polyvinyl acetal having low plasticizer content and an improved polyvinyl alcohol content.

For manufacturing laminated glazing with good penetration resistance, for example for automotive application like windscreens according to ECE R43 or in buildings according to EN 356, it is known to laminate two glass sheets with plasticized polyvinyl butyral.

Recently, thin PVB-films having a low or no plasticizer content have been proposed as "functionality carrier" in addition with thick PVB-films having the usual content of plasticizer and adhesion control agent for the production of functionalized laminated glazing. There are various functionalities possible, one example would be the introduction of an obscuration area in a windshield to hide bus bars of camera systems.

This thin, low or no plasticizer containing film can be applied to the thick, standard PVB film in the form of patches, which only cover part of the surface of said film. However, it has been found that the edge of the thin film can be visible, leading to distortion in the optical appearance of the laminated glass.

A further problem with laminated glass, especially in extreme climatic conditions with high temperatures, UV exposure and a high humidity levels, is a possible yellowing of the edges where the film material is in contact with the surrounding environment. This effect is generally tested in the laboratory using forcing conditions like elevated temperature and/or UV radiation. Yellowing is leading to a lower optical quality of the laminated glass and is generally not acceptable in the glass industry.

Thus, there is still a need for improved film materials for laminated glass.

Surprisingly, the present inventors have found that using a polyvinyl acetal film with no or low plasticizer content and a high content of free hydroxyl groups in the polymer chain dramatically improves the yellowing effect of the laminate. Additionally, it can improve the edge visibility of a patch of said film when used in combination with a standard, plasticized film. Also, the inventive polyvinyl acetal film lead to an improved viscosity profile, especially in low viscosities during the extrusion conditions and a high viscosity and/or a high glass transition temperature Tg during its intended use.

Now therefore, the present invention relates to a laminated glass comprising a film A between two glass sheets, wherein film A contains a polyvinyl acetal PA and optionally a plasticiser, characterised in that, prior to lamination, the amount of plasticiser in film A is less than 16 % by weight and the content of free hydroxyl groups in terms of polyvinyl alcohol groups in the polyvinyl acetal PA is 21 to 40 % by weight.

Hereinafter, the term "prior to lamination" is understood to mean the state of the films A and B prior to having any contact to each other. For example, the term refers to the composition of each film separately formed and separately wound to individual rolls. The term "prior to lamination" refers to the state for the layers or films before combining them either in the lamination process of the laminated glass or prior to building a stack from the layers used for lamination.

The term "free hydroxyl groups" is intended to denote the chemical group "OH".

Preferably, the content of free hydroxyl groups in terms of polyvinyl alcohol groups in the polyvinyl acetal PA is 24 to 27 % by weight, more preferably the content of free hydroxyl groups in terms of polyvinyl alcohol groups in the polyvinyl acetal PA is around 25 % by weight.

Film A used in the laminates of the invention may additionally comprise alkaline metal ions. As alkali metal ion, potassium or sodium or lithium are preferred. Preferred ranges of concentration of the alkali metal ions are 7 - 210, preferably 14 - 140 and more preferably 21 - 140 ppm in the case of lithium, 23 - 690, preferably 46 - 460 and more preferably 69 - 460 ppm in the case of sodium and 39 - 1170, preferably 78 - 780 ppm and more preferably 117 - 780 in the case of potassium. It is furthermore preferred to add the alkali metal ions in form of salts of carboxylic acids having 1 to 10 carbon atoms. Especially preferred is potassium acetate as adhesion control agent.

The total amount of alkali metal salts may be as low as 0.005 % by weight based on the weight of film A. Preferred ranges of alkali metal salt are 0.01 % - 0.1 %; 0.02 - 0.08 %; 0.03 - 0.06 %, each weight % based on the weight of film A.

Film A used in the laminates of the invention may additionally comprise alkaline earth ions, but since their effect on adhesion is limited, only small amounts as compared to the alkali ion should be used. In a first embodiment of the invention film A comprises 0 to 20 ppm alkaline earth ions, preferable 0 to 5 ppm. However, it is known that alkaline earth ions have a balancing effect of adhesion when a plasticized PVB film faces two glass sheets with different surface chemistry. Accordingly, in a second embodiment of the invention, film A comprises 5 - 20 ppm alkaline earth ions. The alkaline earth ions can be added in form salts of carboxylic acids having 1 to 10 carbon atoms. Especially preferred is magnesium acetate as secondary adhesion control agent. In this embodiment, the ratio of alkali ions to alkaline earth ions in ppm in film A is preferable at least than 1, especially higher than 5 and more preferred higher than 10.

In addition, the alkaline titer of film A may be higher than 10, higher than 20, higher than 40, higher than 50, higher than 80, higher than 90 and preferred higher than 100, in each case with a maximum value of 500. In contrast to film A, the alkaline titer of film B is preferred to be lower, and more particularly the difference between alkaline titer (film A) - alkaline titer (film B) is more than 2, 6 and preferably more than 10 AT units.

In another variant of the invention, film A has a dynamic viscosity measure as a 10 % by weight solution in ethanol according to DIN 53015 at 20 ºC of 150 to 300 mPa·s, preferably from 175 to 275, more preferably from 200 to 250 mPa·s.

In a preferred embodiment, film A comprises at least one region being non-transparent to visible light.

The term "non-transparent" refers to any region of the film having a light transmission in the visible spectrum of less than 5%. In a variant, the non-transparent region may fade out towards transparency. In such variants, at least a part of the non-transparent region of the film has a light transmission in the visible spectrum of less than 5%.

Preferably, the laminated glass comprises at least one film B containing a polyvinyl acetal PB and a plasticiser, wherein prior to lamination, the amount of plasticiser in film B is from 16 to 45 % by weight.

The non-transparent region usually comprises a coloring material, either inorganic or organic pigments or inks, which should not dissolve in the polymer matrix and thus resist migration from film A to B.

As pigments, preferable carbon black, iron oxides or spinel pigments are used. The pigments may be dispersed in a carrier fluid like water, alcohol or mixtures of alcohol and water. Furthermore, binders like polyvinylalcohol, polyvinylbutyral, polyvinylpyrrolidone, polyurethanes or poly styrene-acrylate may be added. Such printing compositions are referred to as "printing inks" or simple "inks" hereinafter.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB films A and B.

The printing inks can be applied via techniques that are commonly known in the printing industry such as offset printing, rotogravure printing, flexography, and screen-printing, followed usually by a drying step.

The non-transparent region of film A may also comprise one or several transparent areas. These transparent areas may be used with optical detection devices positioned at or on one surface of a glass sheet. Optical detection devices are digital cameras, range finders, haze meters, rain sensors, target detectors, scanning laser devices (LIDAR) or related devices using electromagnetic radiation from within the UV/VIS and NIR/IR range of the spectrum.

It has been found by the present inventors that the film A according to the present invention is especially advantageous for a film A comprising a non-transparent region due to its relatively high content of free hydroxyl groups. Due to the higher content of hydroxyl groups, film A contains less plasticizer after equilibration with plasticizer-rich film B. Thus, film A remain harder leading to a better printing quality.

Films A used in accordance with the invention may contain, in the starting state prior to lamination, less than 16 % by weight (such as 15.9 % by weight), less than 12 % by weight, less than 8 % by weight, less than 6 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight plasticiser, or specifically no added plasticizer.

In the method according to the invention, the film A in the starting state prior to lamination has a thickness of no more than 20 %, preferably 15 %, and preferably no more than 10 % of the thickness of the film or films B.

The thickness of a film A in the starting state prior to lamination is 10 - 250 µm, preferably 20 - 160 µm, preferably 30 - 120 µm, preferably 40 - 100 µm and at most preferably 50 - 80 µm. This range of thickness does not include additional coating on the films. In the laminated glass, the thickness of the film can increase by transfer of plasticiser from film B.

Film A is produced separately from film B (for example extruded or solvent cast) and has either no plasticiser at all or sufficiently small proportion of plasticiser so that subsequent functionalization and processing is not adversely influenced.

The thickness of a film B in the starting state is 450 - 2500 µm, preferably 600 - 1000 µm, preferably 700 - 900 µm. Film B might preferably also have a wedge shape. A plurality of films B may be used in the invention, either being stacked on each other or separated by films A.

In a preferred embodiment, prior to lamination, the total thickness of film A is less than 25% of the total thickness of film B.

In another preferred embodiment, film B consists of at least two sub-films B' and B'', which have a different plasticiser content.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups based on the layers, either identically or differently, of 0.1 to 20 mol %, preferably 0.5 to 3 mol %, or 5 to 8 mol %.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

The polyvinyl alcohol content and polyvinyl acetate content of PVB were determined in accordance with DIN ISO 53401 (Acetate content) and DIN ISO 53240 (PVA content).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B'', which have a different plasticiser content.

In addition, films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In particular, film B may comprise 0.001 to 0.1 % by weight of alkaline metal salts and/or alkaline earth salts of carboxylic acids as adhesion control agent. It is preferred that film B contains magnesium ions in an amount of at least 10 ppm, preferably 20 ppm and most preferably 30 ppm.

### Lamination Process

The present invention also relates to a method for producing the described penetration resistant glass laminates, in which the film A is positioned on a glass sheet, then covered by at least one film B, and a second glass sheet is then applied.

Alternatively, it is possible for film B to be positioned on a glass sheet, then to be covered by at least one film A, and for a second glass sheet to be applied.

The present invention relates furthermore to a method for producing a laminated glass wherein a stack comprising at least one film A and at least one film B is provided, the stack is positioned on a first glass sheet and a second glass sheet is then applied.

It is possible in accordance with the invention to first melt the film A onto a glass sheet over the entire area or locally by increased temperature and to then cover this with the film B. Alternatively, films A and B can be positioned jointly between two glass sheets and melted at increased temperature.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

What are known as autoclave processes are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

What are known as vacuum laminators can also be used. These consist of a chamber that can be heated and evacuated, in which laminated glazings can be laminated within 30 - 60 minutes. Reduced pressures from 0.01 to 300 mbar and temperatures from 100 to 200 °C, in particular 130 - 160 °C, have proven their worth in practice.

In the simplest case, in order to produce the laminated glass laminates, film A or B is positioned on a glass sheet, and the further film B or A is positioned synchronously or subsequently. The second glass sheet is then applied and a glass film laminate is produced. Excessive air can then be removed with the aid of any pre-lamination method known to a person skilled in the art. Here, the layers are also already firstly lightly adhesively bonded to one another and to the glass.

The glass film laminate may then be subjected to an autoclave process. Film A is preferably positioned on the first glass sheet and covered by the thicker film B before the second glass sheet is applied. The method can be carried out in many conceivable and, in principle, practicable variants. For example, film A is easily removed from a roll of an appropriate width, whereas film B has been tailor-cut beforehand to the size of the laminated glass to be produced. This is advantageous in particular in the case of windscreens and other automotive glazing parts. In this case, it is particularly advantageous to additionally still stretch the thicker film B before it is tailor cut. This enables a more economical use of film, or, for the case in which film B has a colour tint, allows the adaptation of the curvature thereof to the upper sheet edge.

In the automotive field, in particular for the production of windscreens, films A and/or B may be provided with a coloured region like an ink ribbon in the upper region of the films. To this end, either the upper part of films A and B can be coextruded with a suitably coloured polymer melt, or there may be a different colouration in some areas in a multi-layer system of one of the films A and B. In the present invention, this can be achieved by complete or partial colouring of at least one of the films A and B.

In accordance with the invention, films B may therefore have a colour tint, which in particular has already been adapted in a prior process step to the geometry of a windscreen.

It is also possible for the films B to have a wedge-shaped thickness profile. The laminated glass laminate according to the invention obtains a wedge-shaped thickness profile even with plane-parallel thickness profile of the film A and can be used in motor vehicle windscreens for HUD displays.

In the simplest case, film B is a commercially available PVB film with or without ink ribbon and with or without a wedge-like thickness profile. Films B with nanoparticles dispersed therein for IR protection can also be used as coloured films. Of course, a film B may also be a film having an acoustic function, such that soundproofing properties that are further improved are obtained by combination with a film A. Of course, a film B may already also combine a number of the mentioned functions.

The thin films A are generally produced by extrusion with use of a cast-film line or in the form of a blown film. Here, a surface roughness may also be produced by controlled melt fracture or with the cast-film method additionally by use of a structured chill roll and/or structure back roll. Alternatively solvent-cast method can be used for producing film A prior to functionalization and use in the described penetration resistant glass laminates. Films used in accordance with the invention preferably have a one-sided surface structure with a roughness Rz from 0 to 25 µm, preferably Rz from 1 to 20 µm, particularly preferably Rz from 3 to 15 µm and in particular Rz from 4 to 12 µm. It is particularly preferable if the side of film A coming into contact with the glass sheet has a surface roughness Rz of no more than 20 % of its thickness.

In a second aspect, the present invention concerns a polyvinyl butyral film for production of a laminated glazing comprising an amount of plasticiser of less than 16 % by weight and a content of free hydroxyl groups in terms of polyvinyl alcohol groups of 21 to 40 % by weight, preferably an amount of plasticizer of less than 5 % by weight and/or a content of free hydroxyl groups of 22 to 27 % by weight, more preferably around 25 % by weight.

### Examples

PVB films were produced from the following single PVB resins as well as mixtures of two different PVB resins according to the following examples.

The Mowital® PVB resins were commercially obtained from Kuraray Europe GmbH. The PVB resin with a PVOH content of 19.3 % used below was prepared by methods well-known in the art.

### According to the invention:

Example 1: Pure Mowital® B60T with a PVOH content of 25.5 wt% was used for film prepraration.

### Comparative Examples:

Example 2: Pure Mowital® B60H with a PVOH content of 18.7 wt% was used for film preparation
Example 3: A 65:35 by weight mixture of a PVB resin with a PVOH content of 19.3 wt% and Mowital® B30H was used for film preparation - the mixture had a PVOH content of 18.8 wt%.
Example 4: A 55:45 mixture of a PVB resin with a PVOH content of 19.3 wt% and Mowital® B60H was used for film preparation - the mixture had a PVOH content of 19.7 wt%

In case of mixtures of PVB resins, the individual powders were prepared by weighing in the corresponding wt% ratio of each resin into a polyethylene bag and mixing until homogeneous.

The resin, respectively the resin mixture, was fed to the inlet funnel of a laboratory extruder of the co-rotating twin screw type. The melt was extruded from a 34 cm wide slit die onto a cooled chill roll to form and subsequently wind thin films in a width of 30 cm with a thickness of 50 µm.

The films thus produces and a commercial automotive grade PVB film with reduced adhesion (TROSIFOL® V100 LE 0.76 mm from Kuraray Europe GmbH, PVOH content of 20.3 wt%) were conditioned at the same climate prior to producing the test laminates.

Test laminates in the dimension 30 x 30 cm were obtained by combining clear glass (Planiclear® 2.1 mm, cleaned with deionized water with a conductivity < 5 µS on a flat glass washing machine) with the thin film samples in the following lay-up orders:
*glass* / *film according to examples 1 to 4* / *V100 LE 0.76 mm* / *glass*

A laminate using only TROSIFOL® V100 LE 0.76 mm (no second film) was prepared serving as a control sample (example 5).

The different sandwiches were put into a vacuum bag for windshield lamination. Pre-laminates were produced by applying vacuum at 20 °C for 20 minutes, and putting the bag into an pre-heated oven at 90 °C for 20 minutes. Final lamination was accomplished by using an autoclave with standard conditions (90 min comprising a 30 min hold time at 140 °C and 12 bar).

The laminates were placed in a radiation chamber in such a way that the film according to examples 1 to 4 - if present - was directed towards the light source, i.e. upwards. The test chamber was in accordance with DIN EN ISO 12543. However, to achieve more forcing conditions, no cooling fans were running and the chamber was equipped with white reflective walls.

The samples were visually inspected and rated after two weeks in the test chamber. The degree of discoloration, occurring predominantly at the edges of the laminates, was rated using this visual inspection on a scale from 1 to 5 by three people independently and the average rating was reported. A rating of 1 means no noticeable discoloration and 5 means the same discoloration as the control example 5.

Results are reported in the following table. Surprisingly, the laminate according to the invention does not show any noticeable discoloration whereas all other examples, including the control sample, show a clear beige to brownish edge.

| Example | Discoloration Rating |
|---|---|
| 1 | 1 |
| 2 | 3 |
| 3 | 6 |
| 4 | 7 |
| 5 | 5 |

## Claims

1. A laminated glass comprising a film A between two glass sheets, wherein film A contains a polyvinyl acetal PA and optionally a plasticiser, **characterised in that,** prior to lamination,
- the amount of plasticiser in film A is less than 16 % by weight and
- the content of free hydroxyl groups in terms of polyvinyl alcohol groups in the polyvinyl acetal PA is 21 to 40 % by weight.

2. The laminated glass according to claim 1 wherein the content of free hydroxyl groups in terms of polyvinyl alcohol groups in the polyvinyl acetal PA is 24 to 27 % by weight.

3. The laminated glass according to claim 1 or 2 wherein the content of free hydroxyl groups in terms of polyvinyl alcohol groups in the polyvinyl acetal PA is around 25 % by weight.

4. The laminated glass according to any one of claims 1 to 3 wherein film A has a dynamic viscosity measure as a 10 % by weight solution in ethanol according to DIN 53015 at 20 ºC of 150 to 300 mPa·s.

5. The laminated glass according to any one of claims 1 to 4 wherein film A comprises at least one region being non-transparent to visible light

6. The laminated glass according to any one of claims 1 to 5 wherein it additionally comprises at least one film B containing a polyvinyl acetal PB and a plasticiser, wherein prior to lamination, the amount of plasticiser in film B is from 16 to 45 % by weight.

7. The laminated glass according to any one of claims 1 to 6 wherein film A has at least one opening, such that by means of this opening the film B is in direct contact with the glass sheet bearing against film A.

8. The laminated glass according to any one of claims 1 to 7 wherein, prior to lamination, the total thickness of film A is less than 25% of the total thickness of film B.

9. The laminated glass according to any one of claims 1 to 8 wherein film B consists of at least two sub-films B' and B'', which have a different plasticiser content.

10. The laminated glass according to any one of claims 1 to 9 wherein the film B has a wedge-shaped thickness profile.

11. The laminated glass according to any one of claims 1 to 10 wherein, prior to lamination, the total thickness of film A is from 10 to 150 µm.

12. The laminated glass according to any one of claims 1 to 11 wherein, in the final laminate, the total thickness of film A is from 25 to 100 µm.

13. The laminated glass according to any one of claims 1 to 12 wherein, prior to lamination, the amount of plasticizer in film A is equal to or below 7.5 % by weight.

14. The laminated glass according to any one of claims 1 to 13 wherein, prior to lamination, film A does not contain any added plasticizer.

15. A polyvinyl butyral film for production of a laminated glazing comprising an amount of plasticiser of less than 16 % by weight and a content of free hydroxyl groups in terms of polyvinyl alcohol groups of 21 to 40 % by weight.
